# EUROPÄISCHE PATENTSCHRIFT

(11) **EP 0 848 171 B1**
(45) Veröffentlichungstag und Bekanntmachung des Hinweises auf die Patenterteilung: **29.08.2001**
(21) Anmeldenummer: 97120641.2
(22) Anmeldetag: 25.11.1997
(51) Int. Cl.: F16B 21/08, F16B 19/00

(54) **Halteelement aus Kunststoff**
Plastic retaining element.
Elément de retenue en matière plastique.

(30) Priorität: 12.12.1996 DE 19651784
(43) Veröffentlichungstag der Anmeldung: 17.06.1998
(73) Patentinhaber: TRW Automotive Electronics & Components GmbH & Co. KG, 78315 Radolfzell (DE)
(72) Erfinder: Kraus, Willibald, 67269 Grünstadt (DE)
(74) Vertreter: Schieschke, Klaus, Dipl.-Ing.

(56) Entgegenhaltungen:
- EP-A- 0 726 400
- FR-A- 2 132 919
- US-A- 4 900 210
- US-A- 5 306 098

## Beschreibung

Die Erfindung bezieht sich auf ein Halteelement aus Kunststoff, mit einem Kopfteil, einem Schaftteil und einem Fußteil, wobei das Schaftteil über den Außenumfang verteilt jeweils diagonal einander gegenüberliegende, elastische, schräg gegen das Kopfteil gerichtete Haltelippen aufweist, nach dem Oberbegriff des Anspruchs 1.

Als Stand der Technik ist bereits ein derartiges Halteelement bekannt (US-PS 5,306,098), bei welchem das Kopfteil aus einem rechteckförmigen Körper mit einem anschließenden Zylinder besteht. Dieser Zylinder weist am Außenumfang vier einander diagonal gegenüberstehende Rippen auf. Hieran schließt sich das Schaftteil an, an welchem jeweils über den Außenumfang verteilt diagonal einander gegenüberliegende, elastische, schräg gegen das Kopfteil gerichtete Haltelippen angeordnet sind, deren obere Kante jeweils im rechten Winkel zur Längsachse des Halteelements steht. Vorderseitig wird das Schaftteil durch das Fußteil begrenzt, das vier keilförmig zulaufende Stege besitzt.

Weiterer Stand der Technik sind Halteelemente aus Kunststoff, bei welchen ebenfalls das zwischen dem Kopfteil und dem Fußteil liegende Schaftteil mit Haltelippen versehen ist, die schräg gegen das Kopfteil gerichtet sind (US-PS 3,466,966, US-PS 3,494,244, US-PS 3,483,787, DE-OS 24 06 231). Darüberhinaus sind Spiralförmig verlaufende Haltelippen bekannt (US-A-4 900 210).

Die Aufgabe der vorliegenden Erfindung besteht nun darin, ein bekanntes Halteelement der eingangs genannten Bauform bezüglich des Toleranzausgleichs und der Haltewirkung im Hinblick auf den bekannten Stand der Technik zu verbessern.

Diese Aufgabe wird erfindungsgemäß dadurch gelöst, dass das an das Schaftteil angrenzende Kopfteil in Draufsicht S-förmig ausgebildet ist. Durch die kombinative Wirkung dieser beiden Merkmale ergibt sich ein Halteelement mit verbessertem Toleranzausgleich und höherer Effektivität bezüglich der Halterung eines Gegenstandes.

Die Haltelippen können entweder alle in gleicher Richtung spiralförmig ansteigend am Schaftteil angeordnet sein oder abwechselnd spiralförmig ansteigend und spiralförmig abfallend verlaufen. Andere alternative Ausführungsformen sehen vor, dass beispielsweise alle Haltelippen in gleicher Richtung spiralförmig abfallend am Schaftteil angeordnet sind, die gleiche spiralförmige Steigung aufweisen oder unterschiedliche spiralförmige Steigung besitzen.

Die Haltelippen können im Querschnitt jeweils gleiche Dicke besitzen, wobei alternativ die Möglichkeit besteht, dass die Haltelippen jeweils einen konisch zulaufenden Querschnitt aufweisen mit der größten Dicke im Bereich des Schaftteils.

Das S-förmig ausgebildete Kopfteil kann einen größeren Umfang als das Schaftteil besitzen, wobei die Außenschenkel des Kopfteils am Außenumfangs abgerundet ausgebildet sein können. Bei einem im Querschnitt zylinderförmigen Schaftteil können die Rundungen der Außenschenkel des S-förmig ausgebildeten Kopfteils äquidistant zum Außenumfang des zylinderförmigen Schaftteils verlaufen.

Bezüglich der Gestaltung des Fußteils besteht die Möglichkeit, dieses als Kugelabschnitt auszubilden, wobei alternativ der Kugelabschnitt durch zwei mit Abstand parallel verlaufende Ebenen begrenzt sein kann.

Die Haltelippen können sich abschnittsweise jeweils über einen Winkel von 45° bis 120° des Außenumfangs des Schaftteils erstrecken; vorzugsweise ist ein Winkel von 90° für jeden der Abschnitte der Haltelippen vorgesehen.

Die Erfindung wird nachfolgend anhand von in der Zeichnung dargestellten Ausführungsbeispielen näher beschrieben. In der Zeichnung zeigen:
- Fig. 1: eine schematische Seitenansicht einer ersten Ausführungsform des Halteelements;
- Fig. 2: eine Draufsicht auf das Halteelement nach Fig. 1;
- Fig. 3: eine perspektivische Ansicht des Halteelements nach Fig. 1 und 2;
- Fig. 4: eine andere Ausführungsmöglichkeit des erfindungsgemäßen Halteelements in Seitenansicht;
- Fig. 5: eine Draufsicht auf das Halteelement nach Fig. 4;
- Fig. 6: eine perspektivische Ansicht des Halteelements nach Fig. 4 und 5.

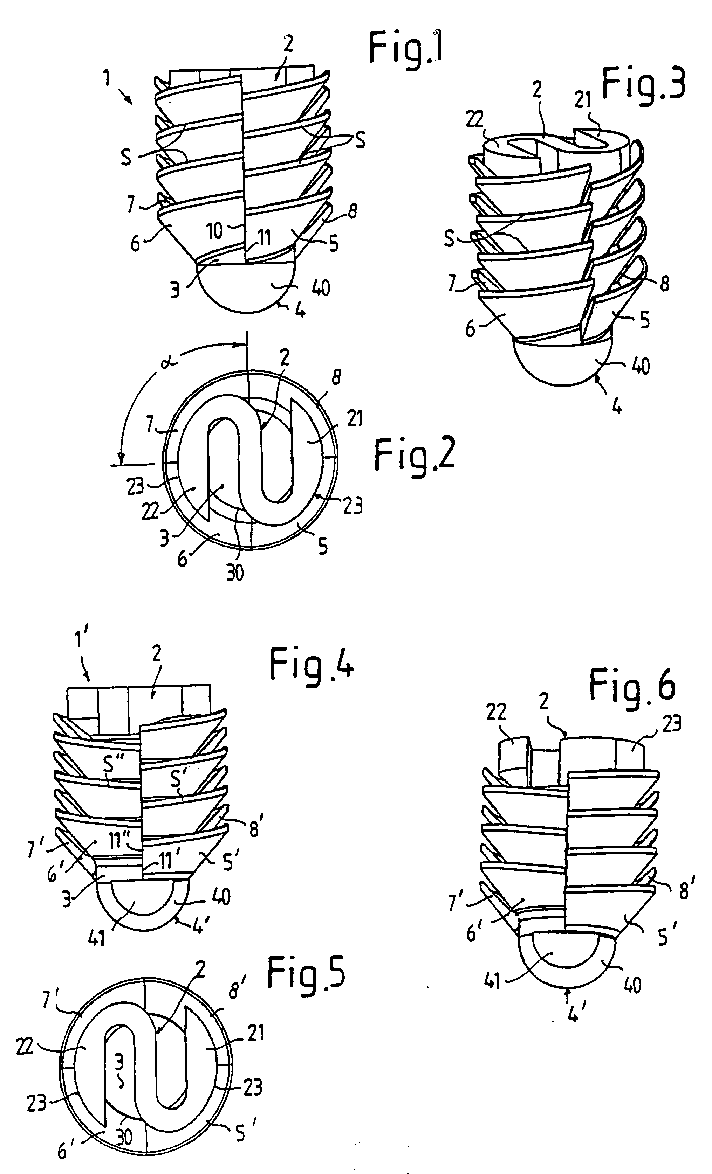

In den Fig. 1 bis 3 ist ein erstes Ausführungsbeispiel eines Halteelements 1 aus Kunststoff dargestellt. Dieses besteht aus einem Kopfteil 2, einem Schaftteil 3 und einem Fußteil 4. Das Schaftteil 3 weist über den Außenumfang verteilt jeweils diagonal einander gegenüberliegende, elastische, schräg gegen das Kopfteil 2 gerichtete Haltelippen 5, 6, 7, 8 auf. Diese Haltelippen sind spiralförmig verlaufend am Schaftteil 3 angeordnet. Sie sind so gestaltet, dass sie in gleicher Richtung spiralförmig ansteigend verlaufen. Es ergibt sich damit jeweils eine spiralförmige Steigung S für jede der Haltelippen 5, 6, 7, 8.

Aus Fig. 1 geht hervor, dass jeweils an eine, den oberen Bereich einer Haltelippe begrenzende Stirnkante 10 eine nächste, den unteren Bereich der benachbarten Haltelippe begrenzende Stirnkante 11 anschließt. Alle Haltelippen 5, 6, 7, 8 können gleiche spiralförmige Steigung S aufweisen. Alternativ besteht auch die nicht näher dargestellte Möglichkeit einer unterschiedlichen spiralförmigen Steigung bezüglich der jeweiligen Haltelippen.

Die Haltelippen 5, 6, 7, 8 können jeweils einen konisch zulaufenden Querschnitt besitzen mit der größten Dicke im Bereich des Schaftteils, wie aus Fig. 1 und 3 entnehmbar.

Insbesondere aus Fig. 2 und 3 geht hervor, dass das an das Schaftteil 3 angrenzende Kopfteil 2 in Draufsicht S-förmig ausgebildet ist. Dieses Kopfteil 2 kann einen größeren Umfang als das Schaftteil 3 haben.

Das S-förmig ausgebildete Kopfteil 2 weist Außenschenkel 21 und 22 auf, welche jeweils mit Rundungen 23 versehen sind. Diese Rundungen 23 der Außenschenkel 21 und 22 des S-förmig ausgebildeten Kopfteils 2 verlaufen gemäß Fig. 2 äquidistant zum Außenumfang 30 des zylinderförmig gestalteten Schaftteils 3.

Aus Fig. 1 und 3 ist ersichtlich, dass das Fußteil 4 als Kugelabschnitt 40 ausgebildet ist. An diesen Kugelabschnitt schließt sich das Schaftteil 3 an, welches mit den Haltelippen 5, 6, 7, 8 versehen ist. Diese Haltelippen erstrecken sich über einen Winkel α, welcher in einem Bereich von 45° bis 120° liegt, wobei jedoch gemäß Fig. 1 bis 3 ein Winkel von 90° für jeden der Abschnitte der Haltelippen 5, 6, 7, 8 bevorzugt ist.

Während bei der Ausführungsform nach Fig. 1 bis 3 die Haltelippen in gleicher Richtung spiralförmig ansteigend am Schaftteil angeordnet sind, sieht die Ausführungsform nach Fig. 4 bis 6 vor, dass am Schaftteil 3 über den Außenumfang verteilt abwechselnd spiralförmig ansteigende und spiralförmig abfallende Haltelippen 5', 6', 7', 8' vorgesehen sind. Hier schließt jeweils an eine, den unteren Bereich einer Haltelippe begrenzende Stirnkante 11' eine nächste, ebenfalls den unteren Bereich der benachbarten Haltelippe begrenzende Stirnkante 11'' an, wie aus Fig. 4 zu entnehmen ist. Aus dieser Darstellung geht weiterhin hervor, dass die spiralförmige Steigung S' der Haltelippe 5' bis zu der Stirnkante 11' abfällt, woraufhin an diese die Stirnkante 11'' der Haltelippe 6' anschließt, die eine ansteigende spiralförmige Steigung S'' besitzt. Auch bei dieser Ausführungsform können die Haltelippen 5', 6', 7', 8' jeweils einen konisch zulaufenden Querschnitt aufweisen mit der größten Dicke im Bereich des Schaftteils 3.

Die Ausführungsform nach Fig. 4 bis 6 weist ein Kopfteil 2 auf, welches analog des vorgenannten Ausführungsbeispiel in Draufsicht nach Fig. 5 S-förmig ausgebildet ist. Auch hier liegen zwei Außenschenkel 21 und 22 auf, welche jeweils mit einer Rundung 23 am Außenumfang versehen sind.

Das Fußteil 4' ist wiederum als Kugelabschnitt 40 ausgebildet, weist jedoch gemäß Fig. 4 bis 6 zwei mit Abstand parallel verlaufende Ebenen 41 auf, welche einander gegenüberliegend den Kugelabschnitt 40 begrenzen.

Das Schaftteil 3 kann im Querschnitt rund oder oval ausgebildet sein. Auch die Haltelippen können in Draufsicht runde oder ovale Form besitzen. Damit lässt sich das Halteelement 1 bzw. 1' sowohl in kreisförmige als auch in langlochartige Trägeröffnungen einsetzen.

Beiden Ausführungsbeispielen des Halteelements 1 und 1' ist gemeinsam, dass die Haltelippen spiralförmig verlaufend am Schaftteil angeordnet sind und somit neben einer verbesserten Haltewirkung auch eine Verbesserung des Toleranzausgleichs bewirken.

## Patentansprüche

1. Halteelement (1, 1') aus Kunststoff, mit einem Kopfteil (2), einem Schaftteil (3) und einem Fußteil (4, 4'), wobei das Schaftteil (3) über den Umfang verteilt jeweils diagonal einander gegenüberliegende, elastische, schräg gegen das Kopfteil (2) gerichtete Haltelippen (5, 6, 7, 8; 5', 6', 7', 8') aufweist, welche spiralförmig verlaufend am Schaftteil (3) angeordnet sind,
**dadurch gekennzeichnet,**
dass das an das Schaftteil (3) angrenzende Kopfteil (2) in Draufsicht S-förmig ausgebildet ist.

2. Halteelement nach Anspruch 1 und 2,
**dadurch gekennzeichnet,**
dass alle Haltelippen (5, 6, 7, 8) in gleicher Richtung spiralförmig ansteigend am Schaftteil (3) angeordnet sind (Fig. 1 bis 3).

3. Halteelement nach Anspruch 2,
**dadurch gekennzeichnet,**
dass jeweils an eine, den oberen Bereich einer Haltelippe (5, 6, 7, 8) begrenzende Stirnkante (10) eine nächste, den unteren Bereich der benachbarten Haltelippe begrenzende Stirnkante (11) anschließt.

4. Halteelement nach Anspruch 1,
**dadurch gekennzeichnet,**
dass am Schaftteil (3) über den Außenumfang verteilt abwechselnd spiralförmig ansteigende und spiralförmig abfallende Haltelippen (5', 6', 7', 8') angeordnet sind (Fig. 4 bis 6).

5. Halteelement nach Anspruch 4,
**dadurch gekennzeichnet,**
dass jeweils an eine, den oberen Bereich einer Haltelippe (5', 6', 7', 8') begrenzende Stirnkante (11') eine nächste, ebenfalls den unteren Bereich der benachbarten Haltelippe begrenzende Stirnkante (11'') anschließt.

6. Halteelement nach Anspruch 1,
**dadurch gekennzeichnet,**
dass alle Haltelippen in gleicher Richtung spiralförmig abfallend am Schaftteil angeordnet sind.

7. Halteelement nach einem oder mehreren der vorhergehenden Ansprüche,
**dadurch gekennzeichnet,**
dass alle Haltelippen die gleiche spiralförmig Steigung aufweist.

8. Halteelement nach einem oder mehreren der Ansprüche 1 bis 6,
**dadurch gekennzeichnet,**
dass die Haltelippen unterschiedliche spiralförmige Steigung aufweisen.

9. Halteelement nach einem oder mehreren der vorhergehenden Ansprüche,
**dadurch gekennzeichnet,**
dass die Haltelippen im Querschnitt jeweils gleiche Dicke aufweisen.

10. Halteelement nach einem oder mehreren der vorhergehenden Ansprüche 1 bis 8,
**dadurch gekennzeichnet,**
dass die Haltelippen jeweils einen konisch zulaufenden Querschnitt aufweisen mit der größten Dicke im Bereich des Schaftteils.

11. Halteelement nach einem oder mehreren der vorhergehenden Ansprüche,
**dadurch gekennzeichnet,**
dass das S-förmig ausgebildete Kopfteil (2) einen größeren Umfang als das Schaftteil (3) aufweist.

12. Halteelement nach Anspruch 11,
**dadurch gekennzeichnet,**
dass die Außenschenkel (21, 22) des S-förmig ausgebildeten Kopfteils (2) am Außenumfang abgerundet ausgebildet sind.

13. Halteelement nach Anspruch 12, mit einem im Querschnitt zylinderförmigen Schaftteil (3),
**dadurch gekennzeichnet,**
dass die Rundungen (23) der Außenschenkel (21, 22) des S-förmig ausgebildeten Kopfteils (2) äquidistant zum Außenumfang (30) des zylinderförmigen Schaftteils (3) verlaufen.

14. Halteelement nach einem oder mehreren der vorhergehenden Ansprüche,
**dadurch gekennzeichnet,**
dass das Fußteil (4, 4') als Kugelabschnitt (40) ausgebildet ist (Fig. 1 bis 3).

15. Halteelement nach Anspruch 14,
**dadurch gekennzeichnet,**
dass der Kugelabschnitt (40) durch zwei mit Abstand parallel verlaufenden Ebenen (41) begrenzt ist (Fig. 4 bis 6).

16. Halteelement nach einem oder mehreren der vorhergehenden Ansprüche,
**dadurch gekennzeichnet,**
dass sich die Haltelippen (5, 6, 7, 8; 5', 6', 7', 8') abschnittsweise jeweils über einen Winkel (α) von 45° bis 120° über den Außenumfang des Schaftteils (3) erstrecken.

17. Halteelement nach Anspruch 16,
**gekennzeichnet durch**
einen Winkel (α) von 90° für jeden der Abschnitte der Haltelippen (5, 6, 7, 8; 5', 6', 7', 8').

18. Halteelement nach einem oder mehreren der vorhergehenden Ansprüche,
**dadurch gekennzeichnet,**
dass das Schaftteil (3) im Querschnitt oval oder rund ausgebildet ist.

19. Halteelement nach Anspruch 18,
**dadurch gekennzeichnet,**
dass die Haltelippen (5, 6, 7, 8; 5', 6', 7', 8') in Draufsicht oval oder rund ausgebildet sind.

## Claims

1. Plastic retaining element (1, 1'), having a head part (2), a shank part (3) and a foot part (4, 4'), the shank part (3) having elastic retaining lips (5, 6, 7, 8; 5', 6', 7', 8') which are in each case located diagonally opposite one another so as to be distributed over the circumference, are directed at an angle towards the head part (2) and are arranged so as to run spirally on the shank part (3), **characterized in that** the head part (2) adjoining the shank part (3) is of S-shaped design in plan view.

2. Retaining element according to Claims 1 and 2, **characterized in that** all the retaining lips (5, 6, 7, 8) are arranged so as to rise spirally in the same direction on the shank part (3) (Figs. 1 to 3).

3. Retaining element according to Claim 2, **characterized in that** in each case adjoining an end edge (10) defining the upper region of a retaining lip (5, 6, 7, 8) is a next end edge (11) defining the lower region of the adjacent retaining lip.

4. Retaining element according to Claim 1, **characterized in that** retaining lips (5', 6', 7', 8') alternately rising spirally and falling spirally are arranged on the shank part (3) so as to be distributed over the outer circumference (Figs. 4 to 6).

5. Retaining element according to Claim 4, **characterized in that** in each case adjoining an end edge (11') defining the upper region of a retaining lip (5', 6', 7', 8') is a next end edge (11'') defining the lower region of the adjacent retaining lip.

6. Retaining element according to Claim 1, **characterized in that** all the retaining lips are arranged on the shank part so as to fall spirally in the same direction.

7. Retaining element according to one or more of the preceding claims, **characterized in that** all the retaining lips have the same spiral slope.

8. Retaining element according to one or more of Claims 1 to 6, **characterized in that** the retaining lips have different spiral slopes.

9. Retaining element according to one or more of the preceding claims, **characterized in that** the retaining lips each have the same thickness in cross section.

10. Retaining element according to one or more of the preceding Claims 1 to 8, **characterized in that** the retaining lips each have a conically tapering cross section with the largest thickness in the region of the shank part.

11. Retaining element according to one or more of the preceding claims, **characterized in that** the head part (2) of S-shaped design has a larger circumference than the shank part (3).

12. Retaining element according to Claim 11, **characterized in that** the outer legs (21, 22) of the head part (2) of S-shaped design are designed to be rounded off at the outer circumference.

13. Retaining element according to Claim 12, having a shank part (3) which is cylindrical in cross section, **characterized in that** the rounded portions (23) of the outer legs (21, 22) of the head part (2) of S-shaped design run equidistantly relative to the outer circumference (30) of the cylindrical shank part (3).

14. Retaining element according to one or more of the preceding claims, **characterized in that** the foot part (4, 4') is designed as a spherical section (40) (Figs. 1 to 3).

15. Retaining element according to Claim 14, **characterized in that** the spherical section (40) is defined by two planes (41) running in parallel at a distance apart (Figs. 4 to 6).

16. Retaining element according to one or more of the preceding claims, **characterized in that** the retaining lips (5, 6, 7, 8; 5', 6', 7', 8') extend in sections in each case over an angle (α) of 45° to 120° over the outer circumference of the shank part (3).

17. Retaining element according to Claim 16, characterized by an angle (α) of 90° for each of the sections of the retaining lips (5, 6, 7, 8; 5', 6', 7', 8').

18. Retaining element according to one or more of the preceding claims, **characterized in that** the shank part (3) is of oval or round design in cross section.

19. Retaining element according to Claim 18, **characterized in that** the retaining lips (5, 6, 7, 8; 5', 6', 7', 8') are of oval or round design in plan view.

## Revendications

1. Élément de retenue (1, 1') en matière plastique, comportant une tête (2), un fût (3, 3') et un pied (4, 4'), dans lequel le fût (3) présente, réparties sur son pourtour extérieur, des lèvres de retenue (5, 6, 7, 8 ; 5', 6', 7', 8') opposées diagonalement les unes aux autres, élastiques, dirigées en oblique vers la tête (2), qui sont disposées contre le fût (3) et se développent en forme de spirale, **caractérisé en ce que** la tête (2) délimitant le tronc (3) est réalisée en forme de S en vue de dessus.

2. Élément de retenue selon la revendication 1 ou la revendication 2, **caractérisé en ce que** toutes les lèvres de retenue (5, 6, 7, 8) sont disposées contre le fût en forme de spirales s'élevant dans la même direction (figures 1 à 3).

3. Élément de retenue selon la revendication 2, **caractérisé en ce qu**'à un bord d'attaque (10) délimitant la région supérieure d'une lèvre de retenue (5, 6, 7, 8) est raccordé un bord d'attaque suivant (11) délimitant la région inférieure de la lèvre de retenue voisine.

4. Élément de retenue selon la revendication 1, **caractérisé en ce que** contre le fût (3) sont disposées des lèvres de retenue (5', 6', 7', 8') réparties sur son pourtour extérieur alternativement sous forme de spirales ascendantes et de spirales descendantes (figures 4 à 6).

5. Élément de retenue selon la revendication 4, **caractérisé en ce qu**'à un bord d'attaque (11') délimitant la région supérieure d'une lèvre de retenue (5', 6', 7', 8') est raccordé un bord d'attaque suivant (11") délimitant de même la région inférieure de la lèvre de retenue voisine.

6. Élément de retenue selon la revendication 1, **caractérisé en ce que** toutes les lèvres de retenue sont disposées contre le fût en forme de spirales s'abaissant dans la même direction.

7. Élément de retenue selon l'une ou plusieurs des revendications précédentes, **caractérisé en ce que** toutes les lèvres de retenue présentent une forme de spirale avec la même pente.

8. Élément de retenue selon l'une ou plusieurs des revendications 1 à 6, **caractérisé en ce que** les lèvres de retenue présentent des formes de spirales avec des pentes différentes.

9. Élément de retenue selon l'une ou plusieurs des revendications précédentes, **caractérisé en ce que** les lèvres de retenue présentent, en coupe, toutes la même épaisseur.

10. Élément de retenue selon l'une ou plusieurs des revendications 1 à 8, **caractérisé en ce que** les lèvres de retenue présentent une coupe convergeant de manière conique, la plus grande épaisseur étant située dans la région du fût.

11. Élément de retenue selon l'une ou plusieurs des revendications précédentes, **caractérisé en ce que** la tête (2) en forme de S présente un périmètre plus grand que celui du fût (3).

12. Élément de retenue selon la revendication 11, **caractérisé en ce que** les branches (21, 22) de la tête (2) en forme de S présentent une forme arrondie sur leur pourtour extérieur.

13. Élément de retenue selon la revendication 12, dont le fût (3) présente en coupe une forme cylindrique, **caractérisé en ce que** les arrondis (23) des branches (21, 22) de la tête (2) en forme de S sont situés à égale distance du périmètre extérieur (30) du fût (3) en forme de cylindre.

14. Élément de retenue selon l'une ou plusieurs des revendications précédentes, **caractérisé en ce que** le pied (4, 4') est conçu comme une calotte de sphère (40) (figures 1 à 3).

15. Élément de retenue selon la revendication 14, **caractérisé en ce que** la calotte de sphère (40) est délimitée par deux plans (41) s'étendant parallèlement l'un à l'autre à une certaine distance (figures 4 à 6).

16. Élément de retenue selon l'une ou plusieurs des revendications précédentes, **caractérisé en ce que** les lèvres de retenue (5, 6, 7, 8 ; 5', 6', 7', 8') se présentent chacune sous forme de section s'étendant sur le périmètre extérieur du fût (3) selon un angle (α) situé dans une plage de 45° à 120°.

17. Élément de retenue selon la revendication 16, caractérisé par un angle (α) de 90° pour chacune des sections des lèvres de retenue (5, 6, 7, 8 ; 5', 6', 7', 8').

18. Élément de retenue selon l'une ou plusieurs des revendications précédentes, **caractérisé en ce que** le fût (3) présente en coupe une forme ovale ou ronde.

19. Élément de retenue selon la revendication 18, **caractérisé en ce que** les lèvres de retenue (5, 6, 7, 8 ; 5', 6', 7', 8') présentent en vue de dessus une forme ovale ou ronde.
